# NEUE EUROPÄISCHE PATENTSCHRIFT

(11) **EP 2 703 675 B2**
(45) Veröffentlichungstag und Bekanntmachung des Hinweises auf die Entscheidung über den Einspruch: **17.01.2024**
(45) Hinweis auf die Patenterteilung: 05.10.2016
(21) Anmeldenummer: 13194929.9
(22) Anmeldetag: 27.10.2009
(51) Int. Cl.: F16D 25/10, F16D 25/08

(54) **Doppelkupplung mit stehendem Kolben und verbesserten Einrücklagern**
Double clutch with standing pistons and improved engagement bearings
Double embrayage doté d'un piston vertical et de butées d'embrayage améliorées

(30) Priorität: 28.10.2008 DE 102008055682
(43) Veröffentlichungstag der Anmeldung: 05.03.2014
(62) Teilanmeldung aus: 09174100.9
(73) Patentinhaber: GETRAG B.V. & Co. KG, 74199 Untergruppenbach (DE)
(72) Erfinder: Gremplini, Hansi, 74379 Ingersheim (DE)
(74) Vertreter: Witte, Weller & Partner Patentanwälte mbB

(56) Entgegenhaltungen:
- DE-A1-102004 015 214
- DE-A1-102004 027 088
- DE-A1-102004 055 361
- DE-A1-102006 010 707
- DE-A1-102007 008 946
- DE-A1-102008 011 724
- DE-T2-602004 009 042
- FR-A- 2 851 626

## Beschreibung

Die vorliegende Erfindung betrifft eine Doppelkupplungsanordnung für ein Doppelkupplungsgetriebe mit einer Eingangswelle, wobei die Doppelkupplungsanordnung eine erste Reibkupplung, eine zweite Reibkupplung, zwei Ausgangswellen, eine gehäusefeste Nabe, eine erste gehäusefeste Kolben/Zylinderanordnung und eine zweite gehäusefeste Kolben/Zylinderanordnung aufweist, wobei Eingangsglieder der Reibkupplungen an die Eingangswelle koppelbar sind, wobei Ausgangsglieder der Reibkupplungen jeweils mit einer der zwei Ausgangswellen verbunden sind, wobei die Reibkupplungen (24, 26) in radialer Richtung ineinander verschachtelt sind, und wobei die Reibkupplungen jeweils mittels einer der gehäusefesten Kolben/Zylinderanordnungen und eines Einrücklagers betätigbar sind. Die vorliegende Erfindung betrifft ferner ein Verfahren zum Zusammenbauen einer derartigen Kupplungsanordnung.

Eine Doppelkupplungsanordnung mit gehäusefesten Kolben/Zylinderanordnungen ist aus dem Dokument DE 10 2004 061 020 A1 bekannt.

Doppelkupplungsgetriebe weisen eine Doppelkupplungsanordnung sowie zwei Teilgetriebe auf. Die Teilgetriebe sind in der Regel in Vorgelegebauweise ausgeführt. Eines der Teilgetriebe ist dabei geraden Gangstufen zugeordnet, das andere Teilgetriebe ist ungeraden Gangstufen zugeordnet.

Durch überschneidende Betätigung der zwei Kupplungen der Doppelkupplungsanordnung kann ein Gangwechsel ohne Zugkraftunterbrechung durchgeführt werden.

Diese Art von Doppelkupplungsgetriebe eignet sich für Kraftfahrzeuge, insbesondere für Personenkraftwagen.

Bei den Doppelkupplungsanordnungen werden heutzutage in der Regel fluidisch betriebene (nasse) Reibkupplungen verwendet, beispielsweise nasslaufende Lamellenkupplungen.

Dokument DE 10 2006 010 707 A1 offenbart eine gattungsgemässe Doppelkupplungsanodnung, die jedoch keine Federanordnungen für die die beiden Einrücklager aufweisen.

Aus dem Dokument DE 10 2004 013 265 A1 ist eine Doppelkupplungsanordnung bekannt, bei der den zwei Reibkupplungen jeweils ein mitlaufender Betätigungskolben zugeordnet ist, und wobei die Betätigungskolben eine einen Druckbeaufschlagbaren Kolbenraum zugewandte erste radiale Wirkfläche und eine einem Fliehkraftdruckausgleichsraum zugewandte zweite radiale Wirkfläche aufweisen. Die Zufuhr von Fluid zu den Kolbenräumen erfolgt über eine mitdrehende Nabe und eine zwischen dieser Nabe und dem Gehäuse angeordneten Drehdurchführung. Nachteilig bei dieser Art von Doppelkupplungsanordnung ist die Tatsache, dass die Komplexität relativ groß ist und sich hohe Schleppmomente ergeben.

Eine vergleichbare Doppelkupplungsanordnung ist aus dem Dokument DE 102 23 780 C1 bekannt.

Das Dokument EP 1 568 906 A1 offenbarte eine Doppelkupplung mit zwei um eine gemeinsame Drehachse drehbar und axial hintereinander angeordneten Kupplungen. Die Kupplungen weisen einen gemeinsamen angetriebenen Außenlamellenträger und jeweils einen abtreibenden Innenlamellenträger auf. Es ist eine den Außenlamellenträger umgreifende Zughülse vorgesehen, über die eine der beiden Kupplungen betätigbar ist.

Ferner offenbart das Dokument DE 10 2004 055 361 A1 eine Doppelkupplungsanordnung mit zwei radial ineinander geschachtelten Reibkupplungen, die jeweils fluidisch betätigbar sind. Jeder Kupplung ist ein Fliehkraftausgleichsraum zugeordnet, die über eine gemeinsame Leitung mit einer Ventilanordnung verbunden sind.

Aus der eingangs genannten DE 10 2004 061 020 A1 ist bekannt, an einer gehäusefesten Nabe bei radial hintereinander verschachtelten, in die gleiche Richtung wirkenden Kolben/Zylinderanordnungen gehäusefest vorzusehen. Die Kolben/Zylinderanordnungen wirken über Hebelanordnungen auf die ebenfalls radial in einander geschachtelten Reibkupplungen der Doppelkupplungsanordnung. Ein Eingangsglied der radial äußeren Reibkupplung ist an einem Abschnitt der ersten Ausgangswelle (innere Ausgangswelle) drehbar gelagert, der sich in Richtung hin zu der Kolbenwelle erstreckt.

Die bekannten Doppelkupplungsanordnungen haben den Nachteil, dass sie in axialer Richtung relativ lang bauen. Ferner ist es von Nachteil, dass sehr viele unterschiedliche Bauteile benötigt werden, so dass die Bauteilevielfalt relativ hoch bzw. die Modularität relativ gering ist.

Ein weiteres Problem bei den bekannten Doppelkupplungsanordnungen stellt die Montage der Doppelkupplungsanordnung an weitere Doppelkupplungsgetriebeteile dar. Der Raum zwischen der Doppelkupplungsanordnung und den restlichen Getriebeteilen ist in axialer Richtung üblicherweise derart gering, dass ein Verbinden des Doppelkupplungsgehäuses mit dem restlichen Getriebegehäuse z.B. durch Schraubverbindungen, in axialer Richtung nur schwer bewerkstelligt werden kann. Schafft man in axialer Richtung mehr Raum, um das Durchführen der Verbindung zu erleichtern, so wirkt sich dies wiederum nachträglich auf die Baulänge in axialer Richtung aus.

Das deutsche Patent DE 60 2004 009 042 T2 offenbart eine Drehmomentübertragungsvorrichtung für ein Kraftfahrzeug, wobei die Drehmomentübertragungsvorrichtung eine Doppelkupplungsanordnung aufweist. Die deutsche Patentanmeldung DE 197 16 600 A1 offenbart eine Betätigungseinrichtung für die pneumatische Betätigung einer Reibungskupplung. Die deutsche Patentanmeldung DE 10 2006 058 974 A1 offenbart eine Ausrückvorrichtung für eine Fahrzeugkupplung.

Es ist daher eine Aufgabe der vorliegenden Erfindung, eine verbesserte Doppelkupplungsanordnung bereitzustellen, die insbesondere einen leichteren Zusammenbau des Doppelkupplungsgetriebes ermöglicht.

Diese Aufgabe wird durch die unabhängigen Ansprüche gelöst.

Es wird im Wesentlichen ein einziges Radiallager zur Aufnahme von sowohl axialen als auch radialen Kräften vorgesehen, die beim Betätigen der Doppelkupplung auftreten. Dieses Radiallager liegt vorzugsweise auf der der Eingangswelle abgewandten Seite der Doppelkupplungsanordnung. Die im Stand der Technik üblichen Radiallager, die im Inneren herkömmlicher Doppelkupplungsanordnungen vorgesehen sind, können weggelassen werden, so dass die Doppelkupplung in axialer Richtung kürzer baut.

Jeder Reibkupplung kann ein Einrücklager zugeordnet sein, wobei die Einrücklager koaxial um die Nabe drehen, aber radial versetzt zueinander angeordnet sind. Durch den radialen Versatz der Einrücklager können diese in axialer Richtung aufeinander zu bewegt werden, so dass sich der Abstand zwischen den Einrücklagern in axialer Richtung bestenfalls vollständig auflösen lässt. Durch diese Maßnahme baut die Doppelkupplungsanordnung wiederum in axialer Richtung kürzer.

Das Einrücklager der zweiten, radial innen liegenden Reibkupplun wird durch eine Federanordnung in eine geöffnete Reibkupplungsstellung vorgespannt, wobei die Federanordnung wiederum an das Eingangsglied der zweiten, radial innen liegenden Reibkupplung koppelt.

Auf diese Weise lässt sich eine Rückstellkraft erzeugen, um eine geschlossene Reibkupplung (in axialer Richtung) wieder zu öffnen.

Außerdem ist es von Vorteil, dass das Einrücklager der ersten, radial außen liegenden Reibkupplung über eine weitere Federanordnung, vorzugsweise eine Tellerfeder, und eine Druckplatte in eine geöffnete Stellung der ersten Reibkupplung vorgespannt ist.

Auf diese Weise können beide Reibkupplungen durch die Federanordnungen selbsttätig in die geöffnete Stellung zurückgeführt werden. Dies ist insbesondere aus sicherheitsrelevanten Aspekten von besonderem Vorteil. Die Reibkupplungen öffnen selbst beim Gesamtausfall der zur Betätigung des Systems benötigten Energie. Wenn beide Kupplungen geöffnet sind, kann das Getriebe nicht mehr beschädigt werden.

Gemäß einer weiteren bevorzugten Ausführungsform liegen sich die Einrücklager der Reibkupplungen axial, auf gleichem Radius, gegenüber.

Diese Maßnahme ermöglicht es, dass die Aktuatorik zum Öffnen und Schließen der jeweiligen Reibkupplung möglichst aus identischen Teilen aufgebaut ist. Die Modularität wird somit erhöht. Die Teilevielfalt wird verringert. Bei geeigneter Wahl der Einrücklager lassen sich axiale Baulängen erzielen, die in der Größenordnung der oben beschriebenen Bauart liegen, bei der die Einrücklager radial versetzt zueinander angeordnet sind.

Auch ist es von Vorteil, wenn zwischen Druckplatten, die jeweils einer der Reibkupplungen und einem der Einrücklager zugeordnet sind, in axialer Richtung zwei Federanordnungen angeordnet sind.

Die Federanordnungen können radial versetzt relativ zu den Einrücklagern angeordnet sein. Die Federanordnungen dienen zum Bereitstellen der erforderlichen Kraft, um die Reibkupplungen im Fall eines Systemausfalls in ihre geöffnete Stellung zu verbringen, und zwar selbsttätig.

Ferner ist es bevorzugt, wenn ein erstes Eingangsglied und ein zweites Eingangsglied derart ausgebildet sind, dass sie jeweils ein Gegenlager für eine der Reibkupplungen bilden.

Auf diese Weise ist es möglich, dass die Doppelkupplungsanordnung einfach und schnell zusammengebaut werden kann. Insbesondere ein Lüftspiel der Reibkupplungen lässt sich so einfach beim Zusammenbauen der Doppelkupplungsanordnung einstellen.

Bei einer Ausgestaltung weisen die Einrücklager jeweils eine erste Lagerschale, die durch einen jeweiligen Kolben einer der Kolben/Zylinderanordnungen gebildet wird, und eine zweite Lagerschale auf, die durch eine der Druckplatten gebildet wird.

Indem man die Kolben und die Druckplatten selbst in Form von Lagerschalen ausbildet sind, lässt sich zusätzlich Raum in axialer Richtung einsparen, was die Gesamtbaulänge wiederum verkürzt.

Insbesondere kann sich ein Zylinder der Kolben/Zylinderanordnung der ersten Reibkupplung in axialer Richtung gegen eine radial innen liegende Lagerschale des ersten Radiallagers abstützen.

Durch diese Maßnahme spart man sich zumindest eine Arretiereinrichtung, um das Radiallager in axialer Richtung gegenüber der Nabe zu fixieren. Über diese Wirkverbindung können auch Axialkräfte übertragen werden.

Bei einer Ausgestaltung weist die Nabe eine stützende Innennabe und eine tragende Außennabe auf, wobei das erste Radiallager und die Kolben/Zylinderanordnungen drehfest auf der Außennabe angebracht sind, wobei eine Form der Außennabe derart an eine Form der Innennabe angepasst ist, dass die Innenund Außennabe (im zusammengebauten Zustand des Doppelkupplungsgetriebes) form- und kraftschlüssig miteinander verbindbar sind.

Diese Maßnahme hat den Vorteil, dass die einzelnen Elemente der Doppelkupplung vorab auf der Außennabe (vor-)montiert werden können. Die Innennabe kann ohne räumliche Probleme an einem anderen Getriebeteil befestigt werden, und zwar insbesondere in axialer Richtung bei freiem Einbauraum. Die Außennabe mit den restlichen Komponenten der Doppelkupplung stört dann nicht. Nach erfolgter Montage der Innennabe am restlichen Getriebegehäuse kann die Doppelkupplungsanordnung in axialer Richtung auf die Innennabe aufgesteckt werden, um anschließend auf geeignete Art und Weise, zum Beispiel durch Aufdrehen auf die Innennabe, miteinander form- und kraftschlüssig verbunden zu werden.

Besonders bevorzugt ist es, wenn die Außennabe an ihrer der Eingangswelle zugewandten Seite mit einem Gewinde versehen ist, um mit einem Gegengewinde der Innennabe verbunden zu werden.

Das Vorsehen von Innen- bzw. Außengewinden erleichtert die kraftschlüssige Verbindung zwischen Innen- und Außennabe, indem diese Komponenten einfach ineinander geschraubt werden, wenn die Doppelkupplungsanordnung am Restgehäuse des Getriebes montiert werden soll.

Die oben genannte Aufgabe wird ferner durch ein Verfahren zum Zusammenbauen einer derartigen Doppelkupplungsanordnung gelöst, wobei die Eingangsglieder, die Reibkupplung, die Kolben/Zylinderanordnungen, die Ausgangsglieder und das erste Radiallager auf der Außennabe vormontiert werden, die dann mit der Innennabe verbunden wird. Insbesondere wird die Innennabe zuerst abtriebswellenseitig (in axialer Richtung) mit einem Getriebegehäuse verbunden, bevor die Verbindung mit der Außennabe erfolgt.

Auf diese Art und Weise ist es möglich, die Doppelkupplungsanordnung in axialer Richtung möglichst kurz zu bauen und trotzdem einfach am restlichen Getriebe zu montieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine teilweise geschnitten dargestellte Seitenansicht einer Doppelkupplungsanordnung;
- Fig. 2: eine Doppelkupplungsanordnung der vorliegenden Erfindung, ähnlich wie die der Fig. 1;
- Fig. 3: eine Verbindungsvariante zwischen einer Eingangswelle und einer Doppelkupplungsanordnung; und
- Fig. 4: ein Flussdiagramm des erfindungsgemäßen Verfahrens.

In der nachfolgenden Figurenbeschreibung werden ähnliche Merkmale mit den gleichen bzw. leicht abgewandelten Bezugszeichen versehen.

Der Aufbau eines Antriebsstrangs 10 und insbesondere einer Doppelkupplungsanordnung 20 gemäß der vorliegenden Erfindung ist nahezu identisch zu dem Aufbau des Antriebsstrangs 10, dem Doppelkupplungsgetriebe 14 bzw. Doppelkupplungsanordnung 20, wie sie in der DE 10 2006 010 113 B4 beschrieben sind, die ebenfalls auf die Anmelderin zurückgeht. Auf den Inhalt der DE 10 2006 010 113 wird Bezug genommen, was den grundsätzlichen Aufbau dieser Komponenten anbelangt.

Die vorliegende Doppelkupplungsanordnung 20 gemäß der vorliegenden Erfindung unterscheidet sich im Wesentlichen von der Doppelkupplungsanordnung der DE 10 2006 010 113 darin, dass innerhalb der Doppelkupplungsanordnung 20 liegende Radiallager bei der vorliegenden Erfindung nicht mehr vorhanden sind. Darauf wird nachfolgend noch im Detail angegangen werden.

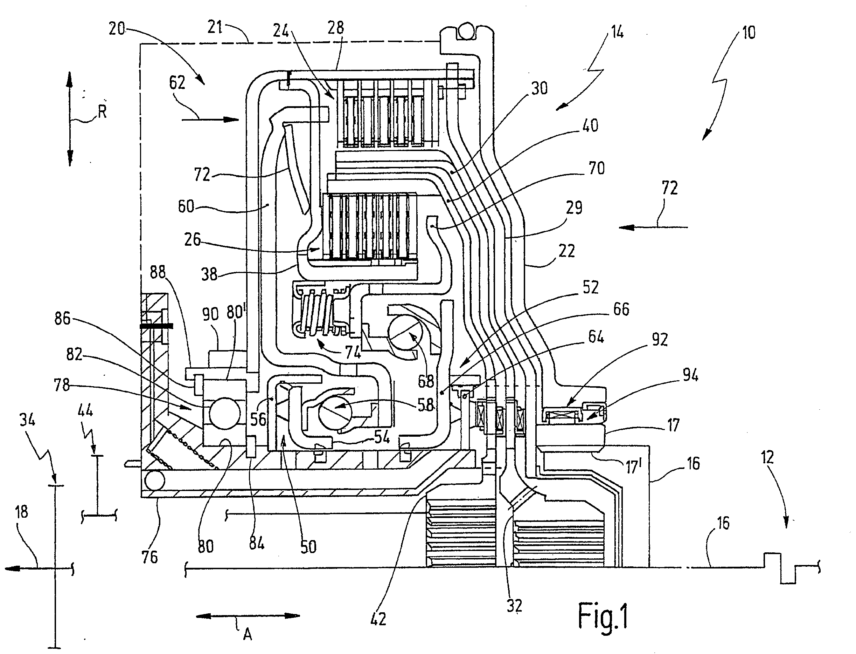

Fig. 1 zeigt einen Antriebsstrang 10, der einen Antriebsmotor, wie zuvor einen Verbrennungsmotor 12, und ein Doppelkupplungsgetriebe 14 aufweist. Ein Eingang des Doppelkupplungsgetriebe 14 ist mit einer Kurbelwelle 16 (Eingangswelle) des Verbrennungsmotors 12 verbunden. Das Doppelkupplungsgetriebe 14 weist eine Abtriebswelle 18 auf, die in an sich bekannter Weise mit Antriebsrädern eines Fahrzeugs verbunden werden kann.

Das Doppelkupplungsgetriebe 14 weist eine Doppelkupplungsanordnung 20 auf, die in einem Gehäuse 21 (dargestellt mit Strichlinie) aufgenommen ist. Ein Kupplungsdeckel 22 ist hier mit durchgezogener Linie gezeigt.

Die Doppelkupplungsanordnung 20 beinhaltet eine erste Reibkupplung 24 und eine zweite Reibkupplung 26. Die zwei Reibkupplungen 24, 26 sind hier radial ineinander verschachtelt angeordnet, wobei die erste Reibkupplung 24 radial außen liegt.

Die erste Reibkupplung 24 weist ein erstes Eingangsglied 28 auf, das über eine Mitnehmerscheibe 29 an die Eingangswelle 16 koppelt. Die Mitnehmerscheibe 29 ist drehfest mit dem ersten Eingangsglied 28 verbunden. Das erste Eingangsglied 28 erstreckt sich nach der Art eines Korbs in axialer Richtung A. Die zwei Reibkupplungen 24, 26 sind radial innerhalb des ersten Eingangsglieds 28 angeordnet.

Die erste Reibkupplung 24 weist ferner ein erstes Ausgangsglied 30 auf. Das erste Ausgangsglied 30 ist mit einer ersten Ausgangswelle 32 der Doppelkupplungsanordnung 20 verbunden. Die erste Ausgangswelle 32 ist als Vollwelle ausgebildet und ist mit einem ersten Teilgetriebe 34 des Doppelkupplungsgetriebes 14 verbunden.

Das erste Ausgangsglied 30 ist ebenfalls nach der Art eines Gehäusekorbs ausgebildet und erstreckt sich radial innerhalb des ersten Eingangsglieds 28, wobei die erste Reibkupplung 24 dazwischen aufgenommen ist.

Die zweite Reibkupplung 26 weist ein zweites Eingangsglied 38 auf. Das zweite Eingangsglied 38 ist drehfest mit dem ersten Eingangsglied 28 verbunden. Die zweite Reibkupplung 26 weist ferner ein zweites Ausgangsglied 40 auf. Das zweite Ausgangsglied 40 ist ebenfalls nach der Art eines Korbes ausgebildet und erstreckt sich radial innerhalb des ersten Ausgangsglieds 30. Das zweite Ausgangsglied 40 ist mit einer zweiten Ausgangswelle 42 verbunden, die als Hohlwelle konzentrisch zu der ersten Ausgangswelle 32 angeordnet ist. Die zweite Ausgangswelle 42 ist mit dem zweiten Teilgetriebe 44 des Doppelkupplungsgetriebes 14 verbunden.

Das erste Eingangsglied 28, das erste Ausgangsglied 30 und das zweite Ausgangsglied 40 erstrecken sich, wie oben erwähnt, nach der Art von Körben ausgehend von dem Bereich der Kurbelwelle 16 hin in Richtung zu den Teilgetrieben 34, 44. Zum anderen weist die Doppelkupplungsanordnung 20 eine gehäusefeste Nabe 76 auf, die sich in axialer Richtung A von dem Bereich der Teilgetriebe 34, 44 in Richtung hin zu dem Bereich der Kurbelwelle 16 erstreckt. Die gehäusefeste Nabe 76 ist dabei koaxial zu den zwei Ausgangswellen 32, 42 angeordnet und umgibt diese.

Zwischen einer Stirnseite der gehäusefesten Nabe 76 und einem Radialabschnitt des zweiten Ausgangsglieds 40 ist ein erstes Axiallager angeordnet. Zwischen der Rückseite dieses radialen Abschnitts und einem radialen Abschnitt des ersten Ausgangsglieds 30 ist ein zweites Axiallager angeordnet. Zwischen der Rückseite des radialen Abschnitts des ersten Ausgangsglieds 30 und einem radialen Abschnitt des ersten Eingangsglieds 28 bzw. der Mitnehmerscheibe 29 ist ein drittes Axiallager angeordnet. Die Axiallager sind in radialer Richtung R etwa mit einer ersten Kolben/Zylinderanordnung 50 ausgerichtet.

Zwischen dem Gehäuse 21 bzw. dem Gehäusedeckel 22 der Doppelkupplungsanordnung 20 und der Kurbelwelle 16 bzw. einem Mitnehmer 17 mit Innenverzahnung 17' der Mitnehmerscheibe 29 sind eine Wellendichtung 94 sowie ein (weiteres) Radiallager 92 vorgesehen.

Das erste und das zweite Teilgetriebe 34, 44 sind nach der Art von Vorgelegegetrieben ausgebildet, wie es im Stand der Technik an sich bekannt ist. Das erste Teilgetriebe 34 beinhaltet beispielsweise gerade Gangstufen, und das zweite Teilgetriebe 44 beinhaltet beispielsweise ungerade Gangstufen.

Ein axial vorstehender Abschnitt des ersten Ausgangsglieds 30 dient als Innenlamellenträger für die erste Reibkupplung 24.

Radial benachbart hierzu dient ein sich axial erstreckender Abschnitt des zweiten Ausgangsglieds 40 als Außenlamellenträger der zweiten Reibkupplung 26.

Zum Betätigen der zwei Reibkupplungen 24, 26 sind eine erste Kolben/Zylinderanordnung 50 und eine zweite Kolben/Zylinderanordnung 52 vorgesehen. Die Kolben/Zylinderanordnungen 50, 52 sind hier in der Fig. 1 radial übereinanderliegend angeordnet.

Die erste Kolben/Zylinderanordnung 50 weist einen ersten Zylinder 56 auf, der starr mit der gehäusefesten Nabe 76 verbunden ist. Die erste Kolben/Zylinderanordnung 50 weist ferner einen ersten Kolben 54 auf, der in axialer Richtung A in dem ersten Zylinder 56 verschieblich gelagert ist. Ein hierdurch gebildeter Zylinderraum ist über eine nicht näher bezeichnete Radialbohrung mit einer Zuführleitung innerhalb der gehäusefesten Nabe 76 verbunden.

Die Außenseite des ersten Kolbens 54 ist über ein erstes Einrücklager 58 mit einer ersten Druckplatte 60 verbunden. Die erste Druckplatte 60 erstreckt sich radial nach außen und weist einen axialen Abschnitt auf, der dazu ausgelegt ist, die erste Reibkupplung 24 axial mit einer Kraft (vgl. Pfeil 62) zu beaufschlagen. Die erste Druckplatte 60 dreht sich mit dem ersten und dem zweiten Eingangsglied 28, 38 mit. Ein axialer Abschnitt der ersten Druckplatte 60, der sich an die Lamellen der ersten Reibkupplung 24 anlegen kann, erstreckt sich durch eine hier nicht näher bezeichnete Öffnung in einem Radialglied des zweiten Eingangsglieds 38 hindurch. Bei einem konstruktiv realisierten Ausführungsbeispiel wird in der Regel eine Mehrzahl solcher Öffnungen vorgesehen sein, die über den Umfang der ersten Druckplatte 60 verteilt angeordnet sind.

Die erste Druckplatte 60 ist mit einer Federanordnung 72, vorzugsweise einer Tellerfeder, gegenüber dem zweiten Eingangsglied 38 in axialer Richtung A vorgespannt. Axiale Kräfte werden über die Tellerfeder 72 an das zweite Eingangsglied 38, und somit an das erste Eingangsglied 28, übertragen. Andere Federtypen können ebenfalls verwendet werden.

Die zweite Kolben/Zylinderanordnung 52 ist in entsprechender Weise etwa spiegelbildlich zur ersten Kolben/Zylinderanordnung 50 aufgebaut. Die erste und die zweite Kolben/Zylinderanordnungen 50, 52 können folglich mit ähnlichen oder identischen Bauteilen realisiert werden, so dass eine hohe Modularität gegeben ist.

Die zweite Kolben/Zylinderanordnung 52 weist demzufolge einen zweiten Zylinder 64 auf, der fest mit der gehäusefesten Nabe 76 verbunden ist, und zwar im Wesentlichen benachbart zu dem zweiten Ausgangsglied 40.

Die zweite Kolben/Zylinderanordnung 52 weist ferner einen zweiten Kolben 66 auf, der über ein zweites Einrücklager 68 auf eine zweite Druckplatte 70 wirkt. Ein radialer Abschnitt der zweiten Druckplatte 70 kann sich an das Lamellenpaket der zweiten Reibkupplung 26 anlegen. Die zweite Kolben/Zylinderanordnung 52 kann folglich eine zweite Axialkraft (vgl. Pfeil 72) auf die zweite Reibkupplung 26 ausüben, wobei die zweite Axialkraft 72 entgegengesetzt zu der ersten Axialkraft 62 ausgerichtet ist.

Zwischen der zweiten Druckplatte 70 und der ersten Druckplatte 60 ist eine zweite Federanordnung 76 an einem radial innen liegenden Axialabschnitt des zweiten Eingangsglieds 38 befestigt, um die zweite Druckplatte 70 entgegengesetzt zur Axialkraft 72 vorzuspannen. Axialkräfte, die durch die zweite Druckplatte 70 bewirkt werden, werden so auf das zweite Eingangsglied 38, und somit auch auf das erste Eingangsglied 28, übertragen.

Die oben erwähnten, auf das erste Eingangsglied 28 übertragenen Axialkräfte werden in ein (Haupt-)Radiallager 78 bestehend aus einer ersten Lagerschale 80, z.B. einer Kugel 82 und einer zweiten Lagerschale 80' und über einen Befestigungsring 88 eingeleitet. Der Befestigungsring 88 verbindet das Lager 78 mit dem Eingangsglied 28 und kann an seiner radial außen liegenden Seite eine Pumpenverzahnung 90 aufweisen, um mit einer hier nicht näher dargestellten Hydraulikeinrichtung zusammenzuwirken, die Hydraulik- und/oder Kühlfluid über die in der Nabe 76 gezeigten Kanäle und die Radialbohrungen Fluid in den Innenraum der Doppelkupplungsanordnung 20 leitet.

Die Lagerschalen 80, 80' werden durch Sicherungsringe 84, 86 an der Nabe 76 gegen ein axiales Verschieben gesichert. Auch ist der Ring 88 derart ausgebildet, dass Axialkräfte in Richtung des Pfeils 72 vom Radiallager 78 aufgenommen werden können.

Diese Bauweise hat den Vorteil, dass die normalerweise im Inneren der Doppelkupplungsanordnung 20 vorgesehenen Radiallager (vgl. DE 10 2006 010 113 B4) weggelassen werden können. Nahezu alle Radial- und Axialkräfte werden im Wesentlichen vom Radiallager 78 aufgenommen.

Die Einrücklager 58, 68 können in radialer Richtung R gegeneinander versetzt werden, und liegen auf konzentrischen Kreisen. In axialer Richtung A können die Kolben/Zylinderanordnungen 50, 52 sowie die Federanordnungen 72, 74 aufeinander zu bewegt werden. Der Bauraum in axialer Richtung A ist gegenüber der Kupplungsanordnung der DE 10 2006 010 113 erheblich verkürzt.

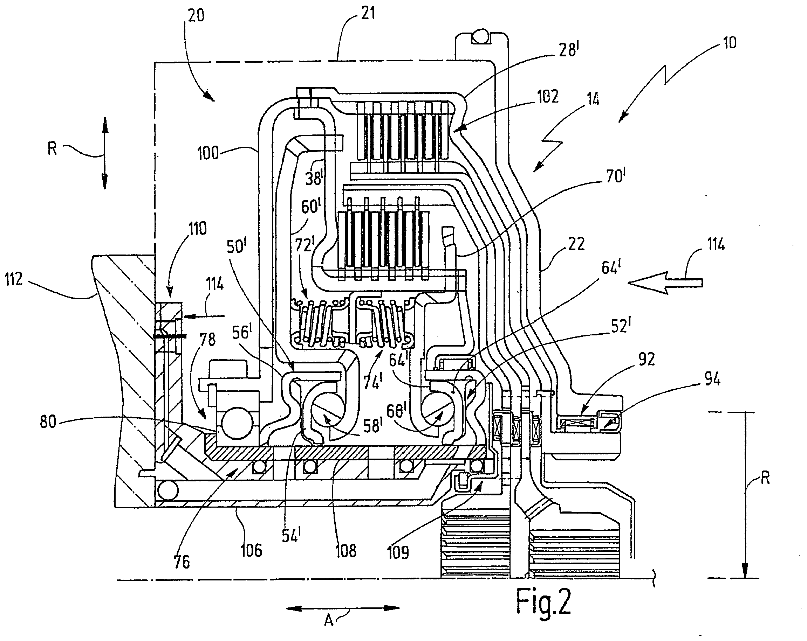

Fig. 2 zeigt eine in mehrfacher Hinsicht im Vergleich zu Fig. 1 abgewandelte Form einer Doppelkupplungsanordnung 20.

In der Fig. 2 sind drei Eingangsglieder 28', 38 und 100 vorgesehen. Das erste Eingangsglied 28' ist an seinem dem Motor 12 abgewandten Ende drehfest mit dem dritten Eingangsglied 100 verbunden. Das zweite Eingangsglied 38' ist ebenfalls drehfest mit dem dritten Eingangsglied 100 verbunden. Das dritte Eingangsglied 100 übernimmt die Funktion des linken Teils des Eingangsglieds 28 der Fig. 1 sowie des Rings 88.

Das erste Eingangsglied 28' erstreckt sich vom Kupplungskörper der ersten Reibkupplung 24 hin bis zur Eingangswelle 16. Die Mitnehmerscheibe 29 ist nicht mehr vorhanden. Das erste Eingangsglied 28' weist ferner eine knieförmige Ausbuchtung im Bereich des Kupplungskörpers der ersten Reibkupplung 24 auf. Diese knieförmige Ausbuchtung 102 dient als Gegenlager, wenn die erste Druckplatte 60' betätigt wird.

Des Weiteren sind die Einrücklager 58' und 68' gegenüber der Fig. 1 abgewandelt. Die Lagerschalen der Einrücklager 58', 68' werden durch die erste Druckplatte 60' und den ersten Kolben 54' bzw. die zweite Druckplatte 70' und den zweiten Kolben 64' selbst gebildet. Dadurch lässt sich wiederum Bauraum in axialer Richtung A einsparen.

Des Weiteren ist der Zylinder 56' der ersten Kolben/Zylinderanordnung 50' derart ausgebildet, dass er als Anschlag für die untere Lagerschale des Radiallagers 78 dient. Man spart sich also auch die Fixierung 84 der Fig. 1.

Des Weiteren sind die Federanordnungen 72' und 74' auf einem gleichen Radius der relativen gemeinsamen Drehachse angeordnet. Gleiches gilt für die erste und zweite Kolben/Zylinderanordnung 50', 52' bzw. das erste Einrücklager 58' und das zweite Einrücklager 68'.

Ein weiterer Unterschied ist in der Ausgestaltung der Nabe 76 zu sehen. Die Nabe 76 ist hier zweiteilig aufgebaut und weist zumindest eine Innennabe 106 und eine Außennabe 108 auf. Die Außennabe 108 ist auf die Innennabe 106 aufsteckbar und lässt sich mit Hilfe z.B. eines Gewindes 109 motorseitig aufschrauben. Alternativ kann ein Sicherungsring, ein Sprengring oder ein radial umlaufender Clip (nicht gezeigt) zur axialen Sicherung der Außennabe gegenüber der Innennabe vorgesehen werden.

Diese Maßnahme hat den Vorteil, dass die Elemente der Doppelkupplung vorab an der Außennabe 108 montiert werden können, und zwar bevor alle Teile der Doppelkupplung, insbesondere die Innennabe 106 und die Außennabe 108 zusammengebaut werden. Dies hat den Vorteil, dass die Innennabe 106 mit einem Radialabschnitt 110 an einem Teil 112 des Getriebes montiert werden kann, der nicht zugänglich wäre, wenn die Doppelkupplungsanordnung 20 bereits ebenfalls auf der Nabe 76 montiert wäre. Zum Beispiel wäre es nicht möglich, Schrauben in Richtung eines Pfeils 114 in das Gehäuseteil 112 einzuschrauben, da ein Platz in axialer Richtung A dafür nicht ausreichen würde. Wenn die Innennabe 106 mit dem Gehäuseteil 112 verbunden ist, kann die, möglicherweise auch an einem anderen Ort, vormontierte Außennabe 108 auf die Innennabe 106 aufgeschoben werden, wie es durch einen Teil 114 angedeutet ist, um dann z.B. durch Drehen um die gemeinsame Drehachse mit der Innennabe 106 verschraubt zu werden.

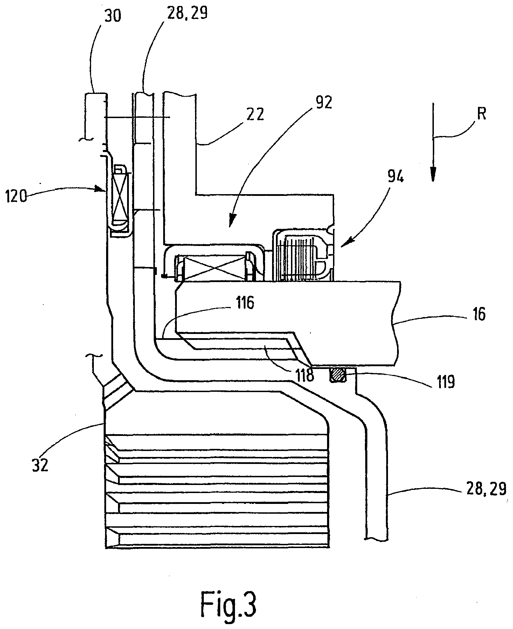

Bezugnehmend auf Fig. 3 ist eine Abwandlung der Ankopplung des Eingangsglieds 28 (vgl. Fig. 2) bzw. der Mitnehmerscheibe 29 (vgl. Fig. 1) an die Eingangswelle 16 gezeigt. Anstatt des Mitnehmervorsprungs 17 wird das erste Eingangsglied 28 bzw. die Mitnehmerscheibe 29 im Bereich der Eingangswelle 16 mit einer Außenverzahnung 116 versehen. Die Eingangswelle 16 weist dann eine Innenverzahnung 118 auf, die mit der Außenverzahnung 116 kämmt. Das Eingangsglied 28 bzw. die Mitnehmerscheibe 29 kann mit Hilfe einer Dichtung 119 gegenüber der Eingangswelle 16 abgedichtet werden.

Die Eingangswelle 16 trägt dann das weitere Radiallager 92 sowie eine Wellendichtung 94.

Vorteil dieser Bauweise ist, dass die Doppelkupplungsanordnung 20 im Bereich der Eingangswelle 16 in radialer Richtung R platzsparender als herkömmliche Lösungen baut. Ferner ist in Fig. 3 eines der Axiallager 120 (vgl. Fig. 1 und 2) gezeigt.

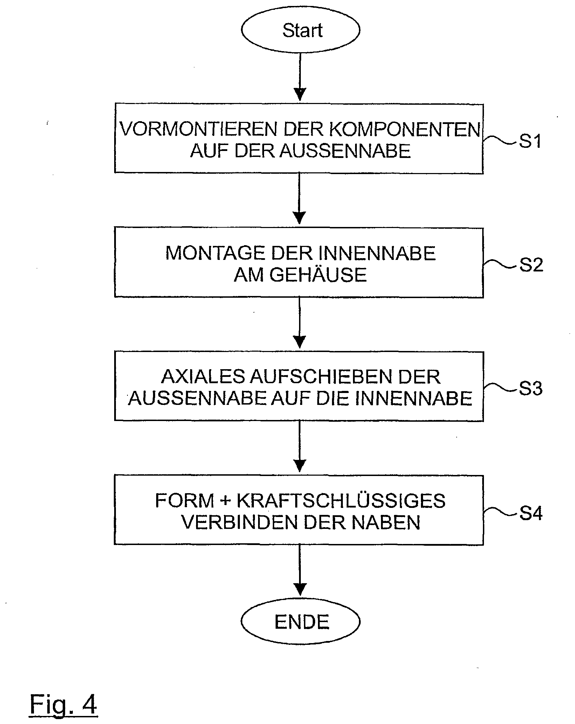

Fig. 4 offenbart das erfindungsgemäße Verfahren zum Zusammenbauen eines Getriebes mit Doppelkupplungsanordnung.

In einem ersten Schritt S1 werden die Komponenten der Doppelkupplungsanordnung 20 auf der Außennabe 108 vormontiert. In einem Schritt S2 wird die Innennabe 106 am Gehäuseteil 112 befestigt, danach wird die Außennabe 108 (inklusive der vormontierten Komponenten der Doppelkupplungsanordnung 20) auf die Innennabe 106 aufgeschoben, um anschließend in einem Schritt S4 form- und/oder kraftschlüssig mit der Innennabe 106 verbunden zu werden.

## Patentansprüche

1. Doppelkupplungsanordnung (20) für ein Doppelkupplungsgetriebe mit einer Eingangswelle (16), wobei die Doppelkupplungsanordnung eine radial außen liegende Reibkupplung (24), eine radial innen liegende Reibkupplung (26), zwei Ausgangswellen (32, 42), eine gehäusefeste Nabe (76), eine erste gehäusefeste Kolben/Zylinderanordnung (50) und eine zweite gehäusefeste Kolben/Zylinderanordnung (52) aufweist, wobei die Kolben/Zylinderanordnungen (50, 52) jeweils einen Zylinder (56, 64) und einen Kolben (54, 66) aufweisen, wobei Eingangsglieder (28, 38, 100) der Reibkupplungen (24, 26) an die Eingangswelle (16) koppelbar sind, wobei Ausgangsglieder (30, 40) der Reibkupplungen (24, 26) jeweils mit einer der zwei Ausgangswellen (32, 42) verbunden sind, wobei die Reibkupplungen (24, 26) in radialer Richtung ineinander verschachtelt sind, und wobei die Reibkupplungen (24, 26) jeweils mittels einer der gehäusefesten Kolben/Zylinderanordnungen (50, 52) und mittels eines Einrücklagers (58, 68) betätigbar sind, wobei ein erstes Radiallager (78) an ein der Eingangswelle (16) abgewandtes Ende der Eingangsglieder (28, 38, 100) gekoppelt ist, um sowohl radiale als auch axiale Kräfte (62, 72) beim Betätigen der Reibkupplungen (24, 26) aufzunehmen, wobei jeder der Reibkupplungen (24, 26) jeweils eines der Einrücklager (58, 68) zugeordnet ist, wobei eines der Einrücklager (68), welches der radial innen liegenden Reibkupplung (26) zugeordnet ist, über eine Federanordnung (74), die an das Eingangsglied (38) der radial innen liegenden Reibkupplung (26) koppelt, und über eine Druckplatte (70) in eine geöffnete Stellung der radial innen liegenden Reibkupplung (26) vorgespannt ist und wobei das andere Einrücklager (58), welches der radial außen liegenden Reibkupplung (24) zugeordnet ist, über eine weitere Federanordnung (72), die wiederum an das Eingangsglied (38) der radial innen liegenden Reibkupplung (26) koppelt, und eine weitere Druckplatte (60) in eine geöffnete Stellung der radial außen liegenden Reibkupplung (24) vorgespannt ist, wobei die Einrücklager (58, 68) koaxial drehend, aber radial versetzt zueinander angeordnet sind und **dadurch gekennzeichnet, dass** die Einrücklager (58', 68') jeweils eine erste Lagerschale (54', 64'), die durch einen jeweiligen Kolben (54', 64') einer der Kolben/Zylinderanordnungen (50, 52) gebildet wird, und eine zweite Lagerschale (60', 70') aufweisen, die durch eine der Druckplatten (60', 70') gebildet wird.

2. Doppelkupplungsanordnung nach Anspruch 1, wobei ein Zylinder (56') der Kolben/Zylinderanordnung (50') der radial außen liegenden Reibkupplung (24) sich in axialer Richtung (A) gegen eine radial innen liegende Lagerschale (80) des ersten Radiallagers (78) abstützt.

## Claims

1. A dual clutch arrangement (20) of a dual transmission having an input shaft (16), wherein the dual clutch arrangement comprises a radial outer friction clutch (24), a radial inner friction clutch (26), two output shafts (32, 42), a hub (76) fixed to a housing, a first piston/cylinder arrangement (50) fixed to the housing, and a second piston/cylinder arrangement (52) fixed to the housing, wherein the piston/cylinder arrangements (50, 52) respectively comprise a cylinder (56, 64) and a piston (54, 66), wherein input members (28, 38, 100) of the friction clutches (24, 26) are coupleable to the input shaft (16), wherein output members (30, 40) of the friction clutches (24, 26) are respectively connected to one of the two output shafts (32, 42), wherein the friction clutches (24, 26) are radially nested into each other, and wherein the friction clutches (24, 26) are actuable respectively by means of one of the piston/cylinder arrangements (50, 52), which is fixed to the housing, and by means of one of the engaging bearings (58, 68), wherein a first radial bearing (78) is coupled to an end of the input members (28, 38, 100), which is facing away from the input shaft (16), in order to receive both radial and axial forces (62, 72) during actuation of the friction clutches (24, 26), wherein each of the friction clutches (24, 26) has respectively assigned one of the engaging bearings (58, 68), wherein one of the engaging bearings (68), which is assigned to the radial inner friction clutch (26), is biased by a spring arrangement (74), which is coupled to the input member (38) of the radial inner friction clutch (26), and by a pressing plate (70) into an opened position of the radial inner friction clutch (26), and wherein the other engaging bearing (58), which is assigned to the radial outer friction clutch (24) is biased by a further spring arrangement (72), which in turn couples to the input member (38) of the radial inner friction clutch (26), and by a further pressing plate (60) into an open position of the radial outer friction clutch (24), wherein the engagement bearings (58, 68) are arranged in a coaxially rotating manner, but are radially displaced to each other, and **characterized in that** the engaging bearing (58', 68') respectively comprises a first bearing shell (54', 64'), which is formed by a respective piston (54', 64') of one of the piston/cylinder arrangements (50, 52), and a second bearing shell (60', 70'), which is formed by one of the pressing plates (60', 70').

2. The dual clutch arrangement of claim 1, wherein a cylinder (56') of the piston/cylinder arrangement (50') of the radial outer friction clutch (24) is supported in the axial direction (A) against a radial inner bearing shell (80) of the first radial bearing (78).

## Revendications

1. Agencement de double embrayage (20) pour une transmission à double embrayage comprenant un arbre d'entrée (16), l'agencement de double embrayage comprenant un embrayage à friction (24) situé radialement à l'extérieur, un embrayage à friction (26) situé radialement à l'intérieur, deux arbres de sortie (32, 42), un moyeu (76) solidaire du boîtier, un premier agencement de piston/cylindre (50) solidaire du boîtier et un deuxième agencement de piston/cylindre (52) solidaire du boîtier, les agencements de piston/cylindre (50, 52) présentant chacun un cylindre (56, 64) et un piston (54, 66), des organes d'entrée (28, 38, 100) des embrayages à friction (24, 26) pouvant être accouplés à l'arbre d'entrée (16), des organes de sortie (30, 40) des embrayages à friction (24, 26) étant reliés respectivement à l'un des deux arbres de sortie (32, 42), les embrayages à friction (24, 26) étant montés l'un dans l'autre en direction radiale, et les embrayages à friction (24, 26) pouvant être actionnés respectivement au moyen de l'un des agencements de piston/cylindre (50, 52) solidaires du boîtier et au moyen d'une des butées d'embrayage (58, 68), un premier palier radial (78) étant accouplé à une extrémité des organes d'entrée (28, 38, 100) opposée à l'arbre d'entrée (16), afin de reprendre des forces (62, 72) tant radiales qu'axiales lors de l'actionnement des embrayages à friction (24, 26), dans lequel l'une des butées d'embrayage (58, 68) est associée respectivement à chacun des embrayages à friction (24, 26), l'une des butées d'embrayage (68) qui est associée à l'embrayage à friction (26) situé radialement à l'intérieur étant précontrainte par le biais d'un agencement de ressort (74) qui accouple l'embrayage à friction (26) situé radialement à l'intérieur à l'organe d'entrée (38), et par le biais d'une plaque de pression (70), dans une position ouverte de l'embrayage à friction (26) situé radialement à l'intérieur, et l'autre butée d'embrayage (58), qui est associée à l'embrayage à friction (24) situé radialement à l'extérieur, étant précontrainte par le biais d'un agencement de ressort supplémentaire (72) qui accouple à son tour l'embrayage à friction (26) situé radialement à l'intérieur à l'organe d'entrée (38), et par le biais d'une une plaque de pression supplémentaire (60), dans une position ouverte de l'embrayage à friction (24) situé radialement à l'extérieur, les butées d'embrayage (58, 68) sont disposées de manière rotative coaxialement mais de manière décalée radialement l'une par rapport à l'autre, et **caractérisé en ce que** les butées d'embrayage (58', 68') comprennent respectivement un premier coussinet de palier (54', 64') qui est formé par un piston respectif (54', 64') de l'un des agencements de piston/cylindre (50, 52) et un deuxième coussinet de palier (60', 70') qui est formé par l'un des plateaux de pression (60', 70').

2. Agencement de double embrayage selon la revendication 1, dans lequel un cylindre (56') de l'agencement de piston/cylindre (50') de l'embrayage à friction (24) situé radialement à l'extérieur s'appuie dans la direction axiale (A) contre un coussinet de palier (80), situé radialement à l'intérieur, du premier palier radial (78).
